# EUROPÄISCHE PATENTSCHRIFT

(11) **EP 2 576 204 B1**
(45) Veröffentlichungstag und Bekanntmachung des Hinweises auf die Patenterteilung: **28.02.2018**
(21) Anmeldenummer: 10731723.2
(22) Anmeldetag: 25.05.2010
(51) Int. Cl.: B32B 3/10, B65D 65/38

(54) **FOLIE UND VERPACKUNG GEFERTIGT AUS EINER SOLCHEN FOLIE MIT EINER DRUCKKRAFTEMPFINDLICHEN ÖFFNUNGSHILFE**
FILM AND PACKAGING PRODUCED FROM SUCH A FILM HAVING AN OPENING AID THAT IS SENSITIVE TO COMPRESSIVE FORCE
FEUILLE ET EMBALLAGE FABRIQUÉ À PARTIR D'UNE FEUILLE DE CE TYPE, AVEC UNE AIDE À L'OUVERTURE RÉAGISSANT À UNE FORCE DE PRESSION

(43) Veröffentlichungstag der Anmeldung: 10.04.2013
(73) Patentinhaber: Mondi AG, 1032 Wien (AT)
(72) Erfinder: MADAI, Gyula, 1039 Budapest (HU)
(74) Vertreter: Schneider, Michael
(86) Internationale Anmeldenummer: PCT/EP2010/057186
(87) Internationale Veröffentlichungsnummer: WO 2011/147441

(56) Entgegenhaltungen:
- EP-A1- 0 162 291
- EP-A2- 0 065 417
- EP-A2- 0 104 548
- FR-A1- 2 567 850
- FR-A3- 2 623 169

## Beschreibung

### TECHNISCHES FELD

Die Erfindung betrifft eine Folie zum Verpacken eines Produkts.

Die Erfindung betrifft weiterhin eine Verpackung für ein Produkt, wobei die Verpackung aus einem Materialsstreifen einer Folie gemäß dem ersten Absatz hergestellt ist.

Die Erfindung betrifft weiterhin ein Produkt, das mit einer Verpackung gemäß dem vorangehenden Absatz verpackt ist.

Die Erfindung betrifft weiterhin eine Verwendung einer Folie gemäß dem ersten Absatz zum Verpacken eines Produkts.

Die Erfindung betrifft weiterhin ein Verfahren zum Verpacken eines Produktes.

### HINTERGRUND

Eine solche Verpackung ist beispielsweise für ein Produkt bekannt, das durch einen Schokoladeriegel gebildet ist. Der Schokoladeriegel weist eine rippenartige Struktur mit zwischen den Rippen liegenden Vertiefungen an seiner Oberfläche auf. Der Anmelderin sind als Verpackung für ein solches Produkt zwei Ausbildungsformen bekannt.

Eine erste Ausbildungsform besteht aus einer Verbundfolie, in die das Produkt eingepackt ist. Die Verpackung weist an ihrem Randbereich eine Einreißinitiierung auf, an der durch An- bzw. Einreißen ein Bruch in der Folie der Verpackung initiiert werden kann. Dadurch ist ein Wegreißen eines Teils der Folie von dem damit verpackten Produkt erleichtert. Dabei kann beispielsweise nur ein vorderer Teil der Verpackung weggerissen werden oder auch ein um das Produkt rund herum verlaufender Teil der Verpackung weggerissen werden. Bei diesem Öffnungsvorgang wird zumeist eine Rippe oder es werden mehrere Rippen des Produktes freigelegt. Diese Rippen können dann entlang einer der Vertiefungen von dem Schokoladeriegel abgebrochen werden und einzeln gehalten bzw. verspeist werden. Das Verpacken solcher Produkte erfolgt üblicherweise auf Hochgeschwindigkeits- Flow-Pack-Maschinen.

Bei der ersten Ausbildungsform der Verpackung besteht das Problem, dass es für einen Benutzer oft nicht eindeutig bzw. intuitiv ersichtlich ist, wie die Verpackung zu öffnen ist. Folglich kommt es bei einer Fehlbenutzung der Verpackung (ein willkürlicher Aufreißvorgang) zumeist zu unschönen Riss- bzw. Bruchausbildungen in der Verpackung, was letztendlich zu einem minderen Produkteindruck für den Benutzer führt.

Gemäß einer zweiten, bekannten (historischen) Ausbildungsform der Verpackung weist die Verpackung zwei Teile auf. Dabei trägt ein äußeres Teil der Verpackung alle zur Kennzeichnung und zum Marketing des Produkts nötigen Informationen und ist als eine Schleife ausgebildet. Ein inneres Teil der Verpackung ist durch eine aluminiumbeschichtete Folie realisiert, in die das Produkt dicht verpackt bzw. eingewickelt ist und zusammen mit dem Produkt von dem ersten Teils der Verpackung schleifenförmig umhüllt ist, wobei zwei Enden des inneren Teils der Verpackung frei zugänglich bleiben.

Um das Produkt freizulegen, wird zunächst der innere Teil der Verpackung durch Krafteinwirkung auf eines der freien Enden aus der Schleife des äußeren Teils der Verpackung herausgedrückt. Danach kann der innere Teil der Verpackung nach Belieben durch einen Benutzer geöffnet werden.

So kann beispielsweise der innere Teil der Verpackung einfach dadurch aufgerissen werden, dass eine Rippe oder einige Rippen von anderen Rippen entlang der Längsrichtung der Rippen abgebrochen werden. Bei dem Abbruchvorgang der Rippen führt die in dem inneren Teil der Verpackung entstehende Spannung dazu, dass zumeist ein zufälliges Aufreißen des inneren Teils der Verpackung im Bereich der Vertiefung zwischen den Rippen in Längsrichtung der Vertiefung erfolgt. Jedoch kann der innere Teil der Verpackung auch dadurch geöffnet werden, dass ein Benutzer mit einem Fingernagel den inneren Teil der Verpackung im Bereich der Vertiefung zwischen den Rippen aufritzt.

Bei all diesen Möglichkeiten des Öffnens des inneren Teils der Verpackung besteht jedoch das Problem, dass der Öffnungsvorgang der Verpackung zumeist zu einer willkürlichen Ausbreitung eines Risses oder eines Bruchs in dem Material des inneren Teils der Verpackung führt. Das Ergebnis sind zumeist Bruchkanten, die nicht geradlinig verlaufen, sondern eine ausgefranste Struktur aufweisen. Bedingt durch die Fransenbildung ist auch das Abreißen von einzelnen Materialteilen des inneren Teils der Verpackung nicht zu vermeiden, die sich im ungünstigsten Fall als Verunreinigung auf der äußeren Oberfläche des mit dem inneren Teil der Verpackung verpackten Produktes niederschlagen.

Die Probleme der zweiten Ausbildungsform der Verpackung könne wie folgt zusammengefasst werden. Zunächst ist der Öffnungsvorgang ebenso wie der Verpackungsvorgang zweistufig. In einer ersten Stufe muss die Schleife, also der äußere Teil der Verpackung entfernt werden. Für den so freigelegten inneren Teil der Verpackung ergibt sich für einen Benutzer der Verpackung kein intuitiver Zugang zum Öffnen der Verpackung. Es obliegt letztendlich seiner Willkür, den inneren Teil der Verpackung zu beschädigen, um ihn zu öffnen und um das damit verpackte Produkt freizulegen. Die auf oben beschriebene Weise verursachte Beschädigung des inneren Teils der Verpackung kann beispielweise beim Einritzen durch den Nagel ebenfalls zur Beschädigung des Produkts führen, wenn sich der Nagel z.B. in eine Rippe des Produkts bohrt. Letztendlich kann dies auch zu einer Verunreinigung des Nagels durch das Produkt führen. Im anderen Fall, bei dem das Produkt zerbrochen wird, um den inneren Teil der Verpackung zu öffnen, führt im Umkehrschluss das Öffnen der Verpackung zur Zerstörung der Struktur des Produkts. Auch in diesem Fall kann eine Verunreinigung der Finger des Benutzers durch das Produkt selbst nicht ausgeschlossen werden. Auch wenn das Produkt selbst von hoher Qualität ist, ist das Ergebnis des Öffnungsvorgangs des inneren Teils der Verpackung zumeist unbefriedigend, frustrierend und hinterlässt einen minderwertigen Eindruck in Bezug auf das damit verpackte Produkt.

Es ist daher eine Aufgabe der Erfindung, eine Folie zum Verpacken eines Produktes, eine Verpackung aus einer solchen Folie bzw. ein mit einer solchen Folie verpacktes Produkt und eine Verwendung einer Folie zum Verpacken eines Produktes bzw. ein Verfahren zum Verpacken und eine Vorrichtung zum Verpacken bereitzustellen, so dass die vorstehend angeführten Probleme vermieden sind.

### ZUSAMMENFASSUNG DER ERFINDUNG

Diese Aufgabe wird zum einen durch ein verpacktes Produkt gemäß Anspruch 1 und zum anderen durch eine Verwendung gemäß Anspruch 7 sowie durch ein Verfahren gemäß Anspruch 8 gelöst.

Offenbart ist eine Folie bzw. ein Laminat zum Verpacken eines Produktes, wobei das Produkt in seiner Oberfläche bereichsweise eine Vertiefung aufweist, wobei die Folie eine Außenlage aufweist, die bei dem mit der Folie verpackten Produkt von dem Produkt weg weist und die eine Schwächungszone aufweist, die an jener Stelle ausgebildet ist, die bei dem mit der Folie verpackten Produkt an der Stelle der Vertiefung lokalisiert ist.

Offenbart ist zudem eine Verpackung für ein Produkt, wobei die Verpackung aus einem Materialstreifen einer erfindungsgemäßen Folie hergestellt ist, wobei das Produkt in seiner Oberfläche bereichsweise eine Vertiefung aufweist, wobei die Folie eine Außenlage aufweist, die bei dem mit der Folie verpackten Produkt von dem Produkt weg weist und eine Schwächungszone aufweist, wobei die in der Folie ausgebildete Schwächungszone an der Stelle der Vertiefung der Oberfläche des Produkts lokalisiert ist.

Der Gegenstand der Erfindung ist ein verpacktes Produkt, das mit einer Folie bzw. einem Laminat verpackt ist, wobei das Produkt ein mit Schokolade überzogener oder aus Schokolade gefertigter Riegel ist, der an seiner Oberfläche bereichsweise eine Vertiefung verlaufend in Längsrichtung von dazu benachbarten Rippen aufweist, welche Rippen über die Vertiefung hinweg erhaben sind, und wobei die Folie eine Außenlage aufweist, die bei dem mit der Folie verpackten Produkt von dem Produkt weg weist und eine Schwächungszone aufweist, wobei besagte Schwächungszone an der Stelle der Vertiefung der Oberfläche des Produkts lokalisiert ist und linienartig ausgebildet ist und ihre Richtung entlang der Vertiefung verläuft und eine druckkraftempfindliche Öffnungshilfe realisiert, die an der Stelle der Vertiefung eine Öffnung durch Druckkrafteinwirkung auf die Folie ermöglicht und ohne Beschädigung des mit der Folie verpackten Produkts den direkten Zugriff auf jenen Teil bzw. ein Freilegen dieses Teils des Produkts, der zum Abtrennen bzw. Abbrechen von dem Produkt vorgesehen ist, erlaubt

Zudem ist der Gegenstand der Erfindung eine Verwendung einer Folie bzw. eines Laminats zum Verpacken eines Produkts, wobei das Produkt ein mit Schokolade überzogener oder aus Schokolade gefertigter Riegel ist, der an seiner Oberfläche bereichsweise eine Vertiefung verlaufend in Längsrichtung von dazu benachbarten Rippen aufweist, welche Rippen über die Vertiefung hinweg erhaben sind, und wobei die Folie eine Außenlage aufweist, die bei dem mit der Folie verpackten Produkt von dem Produkt weg weist und eine Schwächungszone aufweist, wobei die in der Folie ausgebildete Schwächungszone an der Stelle der Vertiefung der Oberfläche des Produkts lokalisiert ist und linienartig ausgebildet ist und ihre Richtung entlang der Vertiefung verläuft und eine druckkraftempfindliche Öffnungshilfe realisiert, die an der Stelle der Vertiefung eine Öffnung durch Druckkrafteinwirkung auf die Folie ermöglicht und ohne Beschädigung des mit der Folie verpackten Produkts den direkten Zugriff auf jenen Teil bzw. ein Freilegen dieses Teils des Produkts, der zum Abtrennen bzw. Abbrechen von dem Produkt vorgesehen ist, erlaubt.

Die Erfindung betrifft weiterhin ein Verfahren zum Verpacken eines Produkts mit einer Folie bzw. einem Laminat, wobei das Produkt ein mit Schokolade überzogener oder aus Schokolade gefertigter Riegel ist, der an seiner Oberfläche bereichsweise eine Vertiefung verlaufend in Längsrichtung von dazu benachbarten Rippen aufweist, welche Rippen über die Vertiefung hinweg erhaben sind, und wobei die Folie eine Außenlage aufweist, die eine Schwächungszone aufweist, die linienartig ausgebildet ist, wobei bei dem Verfahren die Folie mit dem Produkt derart in Kontakt gebracht wird, dass die Außenlage der Folie von dem Produkt weg weist, und eine Schwächungszone in der Außenlage der Folie derart in Bezug auf die Vertiefung ausgerichtet wird, dass die Vertiefung an der Position der Schwächungszone lokalisiert ist und ihre Richtung entlang der Vertiefung verläuft, sodass sie eine druckkraftempfindliche Öffnungshilfe realisiert, die an der Stelle der Vertiefung eine Öffnung durch Druckkrafteinwirkung auf die Folie ermöglicht und ohne Beschädigung des mit der Folie verpackten Produkts den direkten Zugriff auf jenen Teil bzw. ein Freilegen dieses Teils des Produkts, der zum Abtrennen bzw. Abbrechen von dem Produkt vorgesehen ist, erlaubt.

Offenbart ist weiterhin eine Vorrichtung zum Durchführen des erfindungsgemäßen Verfahrens zum Verpacken eines Produktes, wobei das Produkt in seiner Oberfläche bereichsweise eine Vertiefung aufweist, wobei die Vorrichtung eine erste Zuführungs-Einrichtung zum Zuführen einer Folie aufweist, wobei die Folie eine Außenlage aufweist, die bei dem mit der Folie verpackten Produkt von dem Produkt weg weist und die eine Schwächungszone aufweist, die an jener Stelle ausgebildet ist, die bei dem mit der Folie verpackten Produkt an der Stelle der Vertiefung lokalisiert ist. Die Vorrichtung weist weiterhin, eine zweite Zuführungs-Einrichtung zum Zuführen des Produkts und eine Positionierungs-Einrichtung zum Positionieren des Produkts in Bezug auf die Folie auf, so dass die Schwächungszone in der Außenlage der Folie derart in Bezug auf die Vertiefung ausgerichtet wird, dass die Vertiefung an der Position der Schwächungszone lokalisiert ist.

Durch die erfindungsgemäßen Maßnahmen ist auf vorteilhafte Weise erreicht, dass das Öffnen durch Druckeinwirkung auf die Verpackung erfolgen kann. In Abkehr von bisherigen Lehren erfolgt das Öffnen einer Verpackung folglich nicht mehr durch ein Wegreißen eines Streifens der Folie oder ein Herausreißen eines Teils der Folie, wobei jeweils eine Zugkraft nötig ist, von welcher Zugkraft eine Komponente von dem verpackten Produkt weg weist. Vielmehr ist zum Öffnen der Verpackung nun eine Druckkraft nötig, die überwiegend in Richtung des verpackten Produktes wirkt. Die Druckkraft, die planmäßig auf die Schwächungszone oder auf einen unmittelbar benachbarten Bereich dieser Schwächungszone einwirkt, bewirkt einen mechanischen Stress in der Folie. In Ermangelung einer der Druckkraft entgegenwirkenden Unterstützung durch das Produkt, das ja genau an der Stelle der Schwächungszone eine Vertiefung aufweist, bewirkt der mechanische Stress in der Folie letztendlich einen Einriss der Folie an der schwächsten Stelle der Folie, nämlich der Schwächungszone selbst.

Zudem erlaubt die Erfindung erstmals die Verwendung einer Folie, insbesondere in Form eines laminierten Multilagen-Verpackungsfilms, der problemlos auf modernen Hochgeschwindigkeits-Flow-Pack-Maschinen einsetzbar ist, um eine einteilige Verpackung mit einer druckkraftempfindliche Öffnungshilfe herzustellen, die ein sauberes Öffnen der Verpackung in einem einzigen Schritt ermöglicht. Die exakte Positionierung der Schwächungszone oberhalb der Vertiefung in dem Produkt erlaubt dem Benutzer somit einen präzisen und direkten Zugriff auf jenen Teil des Produkts bzw. ein Freilegen dieses Teils des Produkts (z.B. eine Rippe), der zum Abtrennen bzw. Abbrechen von dem Produkt vorgesehen ist.

Die Schwächungszone kann zudem noch durch einen entsprechenden Aufdruck auf der Folie hervorgehoben sein, wobei der Aufdruck auf einfache weise bereist beim üblichen Bedrucken der Folie mit diversen Motiven und Angaben zum Produkt hergestellt werden kann. Auch dafür ist somit kein zusätzlicher Arbeitsgang nötig. Die optische Hervorhebung der Schwächungszone erleichtert ihre exakte Lokalisierung für einen Benutzer der Verpackung.

Die Schwächungszone kann kontinuierlich, also zusammenhängend (z.B. in Form einer durchgehenden Linie), oder diskontinuierlich (z.B. in Form von geschwächten Segmenten oder Linien, die in einer Linien im Abstand zueinander angeordnet sind) ausgebildet sein. Im Fall der diskontinuierlichen Ausbildung der Schwächungszone ist der Vorteil erhalten, dass die nicht geschwächten Bereiche zwischen den geschwächten Bereichen die Stabilität der Folie erhöhen. Die nicht geschwächten Bereiche, wie z.B. stegartige Bereiche zwischen Schwächungslinien stabilisieren die mechanischen Eigenschaften der Folie und erleichtern somit ihre Verarbeitung.

Weiterhin ist auch die bereichsweise Wiederverschließbarkeit der Verpackung möglich. Dazu kann die vordefinierte Rückstellkraft der Folie bzw. des Laminats beitragen. Es können auch mehrere (oder eine) vordefinierte Faltlinie(n) vorgesehen sein, die z.B. durch Heiß-Prägung der Folie oder durch mechanische Prägung der Folie insbesondere mit Torsionseinwirkung auf die Folie erzeugt sind. Durch Heiß-Prägung entsteht eine leichte Schrumpfung der Folie im Bereich der Einwirkung der Hitze. Durch die mechanische Prägung wird die Mikrostruktur der Folie im Bereich der Einwirkung gestört. In beiden Fällen tendiert die Folie dazu sich in die entsprechende Richtung zu biegen. Es entsteht also eine Vorspannung in der Folie, die zu einer vordefinierten Biege- bzw. Klapprichtung führt. Die entlang der Schwächungszone geöffnete Verpackung wird dann nicht vollständig in zwei Teile getrennt. Vielmehr sind die Verpackungsteile z.B. an einer Seitenwand der Verpackung nach wie vor noch verbunden. Eine z.B. in der Seitenwand parallel zu der Schwächungszone verlaufende vordefinierte Faltlinie kann dann dazu benutzt werden, um nach dem Aufdrücken der Folie entlang der Schwächungszone einen ersten Teil der Verpackung von einem zweiten Teil der Verpackung wegzuklappen. Nach Entnahme eines Teils des Produktes kann der weg geklappte erste Teil der Verpackung wieder auf den zweiten Teil der Verpackung gelegt werden und so die Verpackung - auch wenn nicht hermetisch - verschlossen werden. In Abhängigkeit von der inhärenten Rückstellkraft des Laminats ist für das Zurückklappen eine Unterstützung durch den Benutzer nötig oder nicht nötig.

Weitere, besonders vorteilhafte Ausgestaltungen und Weiterbildungen der Erfindung ergeben sich aus den abhängigen Ansprüchen sowie der nachfolgenden Beschreibung. Dabei können die Verpackung, das Produkt, die Verwendung, sowie das Verfahren und die Vorrichtung entsprechend den abhängigen Ansprüchen zur Folie oder umgekehrt weitergebildet sein. Vorteile, die im Zusammenhang mit einem Gegenstand der Erfindung offenbart sind, gelten in entsprechender Weise auch für einen anderen Gegenstand der Erfindung bzw. dessen Weiterentwicklung.

Die bei dem Produkt ausgebildete Vertiefung kann grundsätzlich jede mögliche geometrische Ausgestaltung annehmen. So kann die Vertiefung beispielsweise flächenhaft kreisförmig oder ellipsenförmig ausgebildet sein. Die Vertiefung kann jedoch auch ringförmig gemäß eines Kreises oder einer Ellipse ausgestaltet sein. Zudem können beispielsweise auch rechteckige oder quadratische Strukturen vorgesehen sein. Gemäß einer bevorzugten Ausbildungsform des Produktes handelt es sich bei dem Produkt um einen Schokoladeriegel, der aus einer Basis, die eine platten- oder scheibenartige Struktur aufweist, herausragend eine Anzahl von im wesentlichen parallelen Rippen, z.B. in Längsrichtung des Produkts aufweist. Zwischen den Rippen weist das Produkt Vertiefungen auf, die entsprechend der Orientierung der Rippen - z.B. in Längsrichtung des Produktes - verlaufen. Somit sind die Rippen über die Vertiefungen, die bis zu der Basis hinab reichen, erhaben. Gemäß einer bevorzugten Ausbildungsform der Folie ist die Schwächungszone linienartig ausgebildet und ihre Richtung verläuft entlang der Vertiefung. Grundsätzlich reicht es aus, wenn eine einzige Schwächungszone ausgebildet ist, um ein mit der Folie verpacktes Produkt freizulegen bzw. die Verpackung zu öffnen. Es kann jedoch auch vorgesehen sein, dass entsprechend der Anzahl der Vertiefungen bzw. der Sequenz von Vertiefungen in dem Produkt eine entsprechende Anzahl oder eine geringere Anzahl an Schwächungszonen ausgebildet ist. Die Form der linienartigen Ausbildung kann beispielsweise geradlinig oder gekrümmt bzw. wellenartig sein, um eine intuitive Druckkrafteinwirkung durch einen Benutzer der Verpackung zu erlauben.

Die Richtung der Schwächungszone kann beispielweise strikt parallel zu der Zentrallinie der Vertiefung verlaufen oder auch in einem Winkel dazu. Der Winkel wird jedoch bevorzugt so gewählt, dass ein Anfang und eine Ende der Schwächungszone nach wie vor innerhalb des Bereichs der Vertiefung - oder anders ausgedrückt oberhalb der Vertiefung - liegt, also nicht oberhalb der Rippen zu liegen kommt.

Die gegenständliche Schwächungszone kann nun über die gesamte Folie bzw. einen aus der Folie gefertigten Materialstreifen, aus dem letztendlich die Verpackung für das Produkt hergestellt wird, verlaufen. Die Schwächungszone kann sich somit bis in die Siegelzone oder sogar bis an den Rand erstrecken. Um ein zuverlässiges Aufdrücken der Folie zu gewährleisten, reicht es jedoch aus, dass die Schwächungszone eine Länge aufweist, die der Länge der Vertiefung des Produktes entspricht. Somit kann die gesamte Vertiefung ausgenutzt werden, um einen möglichst großen durch Druckkraft hergestellten Riss in der Folie zu erzeugen. Somit lässt sich ein zu dem Riss benachbarter Lappen der Folie einfach durch einen Benutzer greifen. Die Länge kann jedoch auch kürzer als die Vertiefung gewählt werden.

Ein weiterer Aspekt der Erfindung betrifft die Ausgestaltung der Lagenstruktur der Folie bzw. des Laminats. Grundsätzlich kann besagte Folie auch ausschließlich aus zwei Lagen, nämlich einer Außenlage und einer Innenlage hergestellt werden. Zweckmäßigerweise und den jeweiligen Anforderungen entsprechend, können jedoch zwischen der Außenlage und der Innenlage noch weitere zusätzliche Lagen vorgesehen sein, die beispielsweise der Stabilität und Steifigkeit der Verpackung, der ästhetischen Ausgestaltung der Verpackung oder entsprechend anderer zu definierender funktionaler Merkmale der Verpackung gewählt werden können. Die Stabilität und Steifigkeit der Folie ist wichtig, um ein ungewolltes Durchstoßen der Folie mit spitzen oder scharfkantigen Splittern oder Bröseln, die z.B. in Form von Mandelsplittern auf der Oberfläche des Produkts vorliegen können, zu vermeiden.

In einer bevorzugten Ausbildungsform handelt es sich bei der Außenlage um eine Kunststoff aufweisende Lage oder vollständig aus Kunststoff gefertigte, die möglichst einfach bedruckt werden kann. Die Innenlage, die bei dem mit der Folie verpackten Produkt hin zu dem Produkt weist, also zwischen der Außenlage und dem Produkt lokalisiert ist, ist eine Barrierelage, wie beispielsweise eine Metall aufweisende Lage bzw. eine aus Metall hergestellte Lage, die eine Barrierefunktion der Folie bildet. Die Barrierefunktion kann jedoch auch mit Hilfe anderer Materialien realisiert werden. Die Barrierefunktion stellt bei der Folie sicher, dass kein unbeabsichtigter oder ungewollter Materialtransport von dem verpackten Produkt zu der Umgebung der Verpackung oder von der Umgebung der Verpackung zu dem verpackten Produkt erfolgt.

Bevorzugt ist die Schwächungszone nur außerhalb der Innenlage der Folie, also zum Beispiel nur in der Außenlage und weiteren Zwischenlagen ausgebildet. Eine derart gestaltete Schwächungszone kann beispielsweise relativ einfach und kostengünstig und vor allem sehr rasch und mit hoher Reproduzierbarkeit mit Hilfe eines Laserstrahls hergestellt werden, der das Material der Außenlage und gegebenenfalls weiterer Zwischenlagen verdampft und an der metallischen bzw. metallisierten Lage reflektiert wird. Die Schwächungszone kann jedoch auch bis in die Innenlage hineinreichen, wobei in diesem Fall die Dichtheit der Folie hinsichtlich ihrer Barrierefunktion unbeschadet bleiben muss. Daher kommt für diesen Fall ein Herstellungsverfahren für eine Schwächungszone zum Einsatz, bei dem die Innenlage nicht durchdrungen wird. Ein solches Verfahren ist beispielsweise durch einen Prägevorgang gegeben. Es kann jedoch auch die Kombination aus einem Laserstrahl und einem Prägewerkzeug zum Einsatz kommen. Der Laserstrahl entfernt dann beispielsweise die Außenlage und gegebenenfalls weitere Zwischenlagen und das Prägewerkzeug prägt dann letztendlich die Innenlage. Letztendlich kann jene die Barrierefunktion realisierende Lage auch eine Zwischenlage sein, so dass die Schwächungszone maximal bis zu dieser Zwischenlage reichen darf.

Insbesondere dann, wenn in der Folie eine Barrierelage zum Einsatz kommt, ist die diskontinuierliche Ausgestaltung der Schwächungszone von Vorteil, da diese eine minimale Gefährdung der Barriereeigenschaften mit sich bringt. Durch die Unterbrechung der Schwächungszone, z.B. in Form mehrer Schwächungslinien mit nicht geschwächten Stegen zwischen geschwächten Linien, ist die Wahrscheinlichkeit eines Barriereverlustes verringert.

Zur Herstellung einer Verpackung wird üblicherweise aus der Folie ein Materialstreifen entsprechender Größe entnommen. Dieser Materialstreifen wird sodann um das zu verpackende Produkt gefaltet und es wird eine Längssiegelnaht und eine kopfseitige und eine fußseitige Quersiegelnaht erzeugt. Bei der Verpackung von Produkten, die nicht hitzeempfindlich sind, können diese Siegelnähte durch entsprechende Heißsiegelverfahren hergestellt werden, vorausgesetzt dass der Materialstreifen in den entsprechenden Siegelzonen (üblicherweise an der Innenlage) heißsiegelfähige Eigenschaften aufweist. Bei einem Produkt, das wärmeempfindlich ist, sind die Siegelzonen mit einem kaltsiegelnden ggf. auch für Lebensmittelkontakt zugelassenen Klebstoff versehen und die Siegelnähte werden nur durch ein Zusammenpressen von einander gegenüberliegenden Siegelzonen hergestellt. So werden bei der Herstellung der Längssiegelnaht den Materialstreifen begrenzende unterschiedliche Ränder des Materialstreifens aneinander gefügt. Bei der Herstellung der kopfseitigen und fußseitigen Quersiegelnaht werden jeweils zwei identische Ränder des Materialstreifens aneinandergefügt.

Als das Produkt ist bevorzugt ein mit Schokolade überzogener oder aus Schokolade gefertigter Riegel angedacht, der besagte Struktur aufweist. Es könne jedoch auch andere Produkte darunter verstanden werden, die beispielsweise keine Lebensmittel darstellen.

Bei dem Vorgang des Verpackens des Produktes, also bei dem erfindungsgemäßen Verfahren kommt es letztendlich darauf an, dass das Produkt hinsichtlich seiner Vertiefung in Bezug auf die Schwächungszone in der Folie, die zum Herstellen der Verpackung benutzt wird, entsprechend ausgerichtet wird. Bei der Durchführung des Verfahrens zum Verpacken des Produkts wird also die Folie derart ausgerichtet, dass die Außenlage der Folie von dem Produkt weg weist und sobald das Produkt vollständig verpackt ist, also zum Beispiel besagte Längssiegelnaht und besagte Quersiegelnähte erzeugt wurden, die Schwächungszone in der Außenlage der Folie derart in Bezug auf die Vertiefung ausgerichtet ist, dass die Vertiefung an der Position der Schwächungszone lokalisiert ist. Zu diesem Zweck können auf der Folie Steuermarken vorgesehen sein, welche ein genaues Positionieren der Folie in Bezug auf das Produkt bzw. umgekehrt erlauben. Solche Steuermarken können beispielsweise optoelektronisch ausgewertet werden.

Das Verfahren zum Verpacken wird auf einer erfindungsgemäßen Vorrichtung, also einer Verpackungsmaschine wie z.B. einer Flow-Pack-Maschine durchgeführt. Die Verpackungsmaschine weist eine erste Zuführungs-Einrichtung zum Zuführen von besagter Folie auf. Sie weist auch eine zweite Zuführungs-Einrichtung zum Zuführen von besagtem Produkt auf. Zudem weist die Verpackungsmaschine eine Positionierungs-Einrichtung zum Positionieren des Produkts in Bezug auf die Folie auf. Die Positionierungseinrichtung ist so ausgebildet, dass die Schwächungszone in der Außenlage der Folie derart in Bezug auf die Vertiefung des Produkts ausgerichtet wird, dass die Vertiefung an der Position der Schwächungszone lokalisiert ist. Zu diesem Zweck kann der Vorgang des Zuführens der Folie und des Zuführens des Produkts gegeneinander synchronisiert werden. Dies kann kontinuierlich oder im Register erfolgen. Auch können opto-elektronische Hilfsmittel zum Einsatz kommen, mit deren Hilfe das exakte Ausrichten des Produkts gegenüber der Position bzw. Orientierung der Schwächungszone überwacht und / oder gesteuert wird. Bei dem Positionieren kann entweder die Position der Folie korrigiert bzw. verändert werden und die Position des Produkts konstant gehalten werden oder umgekehrt. Es könne auch beide Positionen verändert werden.

Mögliche Realisierungen der Folie können folgende Ausbildungsformen umfassen, die jedoch nicht als abschließend aufgezählt auszulegen sind.

Die Folie bzw. das Laminat kann einen revers-bedruckten Polymerfilm als Außenlage aufweisen, der neben üblichen produktspezifischen Aufdrucken einen Markierungsaufdruck zum Markieren und verbesserten Erkennen der Schwächungszone aufweist. Die Folie kann einen metallisierten Polymerfilm als Innenlage aufweisen, der über eine Kleberschicht, die mit der Metallisierung in Kontakt steht, mit dem revers-bedruckten Polymerfilm verbunden ist. Das so erhaltene kleberkaschierte Laminat kann zusätzlich an seiner Innenseite, die dem Produkt zugewandt ist, einen Lack aufweisen, der für einen Lebensmittelkontakt zugelassen ist. Zudem sind Kaltsiegelzonen ausgebildet, die zum Herstellen der Siegelnähte für die verschlossene Verpackung dienen.

Gemäß einer weiteren Ausbildungsform kann der zuvor erwähnte metallisierte Polymerfilm durch eine weitere Folie - z.B. eine Aluminiumfolie - ersetzt werden, die einen Lack an ihrer dem Produkt zugewandten Seite aufweist, der für einen Lebensmittelkontakt zugelassen ist.

Im Kontext der vorangehend erörterten Ausbildungsformen der Folie, können mögliche Realisierungen der Schwächungszone folgende Ausbildungsformen aufweisen, die jedoch nicht als abschließend aufgezählt auszulegen sind.

Die Schwächungszone kann durch mechanisches Ritzen (in englischer Sprache "scoring") erzeugt sein, wobei sich der Ritzvorgang durch den revers-bedruckten Polymerfilm (z.B. OPP) (entspricht Außenseite der Produktverpackung), die Kleberschicht und bis hin zu dem metallisierten Polymerfilm erstrecken kann und wobei die Metallisierung unbeschädigt bleibt. Die Metallisierung steht bei diesem Schichtaufbau mit der Kleberschicht in Kontakt und das Polymer des metallisierten Polymerfilms steht mit dem verpackten Produkt in Kontakt. Diese Ritzung kann jedoch auch durch Einwirkung eines Niederenergielasers erzeugt werden, der dann an der Metallisierung reflektiert wird, sodass die Barrierefunktion erhalten bleibt.

Wird anstatt des metallisierten Polymerfilms eine Aluminiumfolie verwendet, dann erstreckt sich die Schwächungszone in Analogie zu den Ausführungen des vorangehenden Absatzes auch nur bis zu dieser Aluminiumfolie.

Um die gewünschte Wiederverschließbarkeit zu erhalten kann - wie eingangs erwähnt - die Folie bzw. das Laminat an der Position der gewünschten Faltlinie bzw. Faltkante eine Heiß-Prägelinie, eine mechanische Prägelinie oder eine durch einen Laserstrahl erzeugte zusätzliche Schwächungszone, z.B. eine "Scoring-line" aufweisen. Um die gewünschte Rückstellkraft in der Folie oder dem Laminat zu erhalten, die dazu führt, dass sich die zuvor geöffnete Verpackung mit geringem oder sogar ohne Zutun eines Benutzers wieder verschließt, kann beispielsweise die mechanisch erzeugte Prägelinie oder die mit Hilfe des Lasers erzeugte Schwächung hinsichtlich ihrer Tiefe oder Breite entsprechend angepasst sein. Die gewünschte Rückstellkraft kann jedoch auch durch eine optimierte Struktur des Laminats erzeugt werden, wie beispielsweise die Verwendung eines 30 µm dicken PP-Films und einer 8 bis 12 µm dicken Folie, wobei der Film mit der Folie mit einem Polyether-basierten Zwei-Komponenten-Klebstoff verklebt ist.

Um die Wiederverschließbarkeit zu realisieren hat es sich als besonders vorteilhaft erweisen, wenn eine Prägelinie im Wesentlichen parallel zu der Schwächungszone und in einem Abstand von der Schwächungszone an einem Bereich ausgebildet ist, der bei einem mit der Folie verpackten Produkt der Position einer Außenkante des Produkts entspricht. Dabei kann es sich um eine obere oder eine untere Außenkante handeln. Zudem ist es von Vorteil, dass eine weitere Prägelinie existiert, um sozusagen eine sequentielles wegklappen von Folienteilen zu ermöglichen. Eine solche weitere Prägelinie kann im Wesentlichen parallel zu der Schwächungszone an einem zu der Position der Schwächungszone korrespondierenden Bereich ausgebildet ist, der bei einem mit der Folie verpackten Produkt auf jener von der Vertiefung abgewandten Seite des Produkts lokalisiert ist. Wenn also die Schwächungszone an der Vorderseite des Produkts lokalisiert ist, dann ist die weitere Prägelinie an der Hinterseite des Produkts lokalisiert.

Bei einem Vorliegen einer Längssiegelnaht, kann auch die Struktur der Längssiegelnaht dazu dienen, die Funktion der Wiederverschließbarkeit zu realisieren. Bei einer Längssigelnaht sind üblicherweise zwei Folienteile aneinandergesiegelt und die so erhaltene Fahne wird umgelegt und an den Verpackungskörper angeschmiegt. Die dabei entstehende Quetschung bzw. Dehnung (allgemein Verformung bzw. Verbiegung) der Folienteile in jenem Bereich, in dem sie aufeinandertreffen, sorgt auch für eine Vorspannung in der Folie, die ein Zurückfedern bzw. Wiederverschließen der zuvor geöffneten und weg geklappten Folienteils. Besonders vorteilhaft ist es, wenn die Längssigelnaht entlang der Vertiefung jedoch an der von der Vertiefung abgewandten Seite des Produkts verläuft, weil dann wieder eine Klapphilfe im Register mit den Vertiefungen erhalten ist.

Aus Gründen der Klarheit sie an dieser Stelle noch erwähnt, dass unter den Begriff "Wiederverschliessbarkeit" bzw. "wieder verschließt" zu verstehen ist, dass sich die entlang der Schwächungszone aufgebrochene Teile der Verpackung einander angenähert bzw. einander überlappend positioniert werden können, jedoch die einmal aufgebrochenen Verpackung nicht wieder hermetisch (dicht) verschlossen wird.

### FIGURENKURZBESCHREIBUNG

Die Erfindung wird im Folgenden unter Hinweis auf die beigefügten Figuren anhand von einem Ausführungsbeispiel noch einmal näher erläutert, auf welches die Erfindung jedoch nicht beschränkt ist. Dabei sind in den verschiedenen Figuren gleiche Komponenten mit identischen Bezugsziffern versehen. Es zeigen auf schematische Weise:
- Fig. 1: eine erfindungsgemäße Verpackung gemäß einem ersten Ausführungsbeispiel der Erfindung;
- Fig. 2: einen Querschnitt entsprechend der in der Fig. 1 eingezeichneten Schnittlinie A-A;
- Fig. 3: eine Detailansicht des in der Fig. 2 eingezeichneten Bereiches B;
- Fig. 4: eine Detailansicht des in der Fig. 2 eingezeichneten Bereiches B;
- Fig. 5: eine erfindungsgemäße Folie mit einer Schwächungszone zum Herstellen einer Verpackung gemäß der Fig.1;
- Fig. 6: ein an der Schwächungszone der Folie gemäß Fig. 5 ausgerichtetes Produkt.

### BESCHREIBUNG DER AUSFÜHRUNGSBEISPIELE

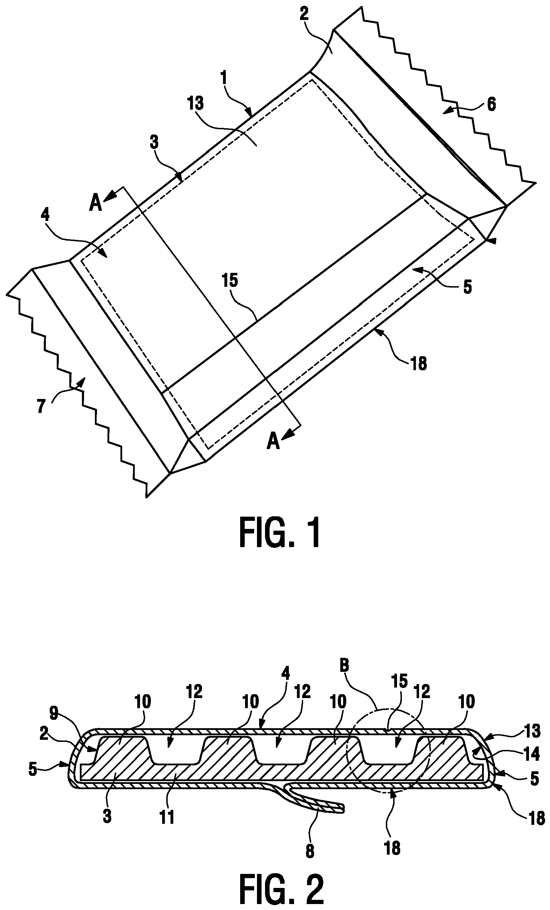

In der Fig. 1 ist eine Verpackung 1 dargestellt, die aus einer Folie 2 gefertigt wurde und ein Produkt 3 verpackt, wobei das Produkt 3 nur stark schematisiert durch seine Umrisse mit unterbrochenen Linien dargestellt wurde. Die Verpackung 1 weist eine Vorderwand 4 und eine vordere Seitenwand 5 auf, die in der gegenständlichen Perspektive der Verpackung 1 sichtbar sind. In dieser Perspektive ist eine hintere Seitenwand und eine Hinterwand der Verpackung 1 nicht sichtbar. Die Verpackung 1 weist eine erste - kopfseitige - Quersiegelnaht 6 und eine zweite - fußseitige - Quersiegelnaht 7 auf. Ebenfalls dargestellt ist eine linienartige geradlinige Schwächungszone 15. Ebenso ist in der Fig. 1 die Position einer ersten Prägelinie 18 angedeutet, die korrespondierend zu der unteren rechten Kante des verpackten Produkts 3 in der Folie 2, genauer gesagt an ihrer Innenseite verläuft.

In der Fig. 2 ist ein Querschnitt durch die in der Fig. 1 dargestellte Verpackung 1 entlang der Schnittlinien A-A dargestellt. An der Hinterseite bzw. der Hinterwand der Verpackung 1 ist eine Längssiegelnaht 8 ausgebildet, die im Wesentlichen an die Verpackung 1 angelegt ist.

Das Produkt 3 weist eine Oberfläche 9 auf. Bei dem Produkt 3 handelt es sich um einen Schokoladeriegel, der eine Anzahl von vier Rippen 10 aufweist, die in Längsrichtung, also in Richtung der Längssiegelnaht 8 verlaufen. Die Rippen 10 erheben sich aus einer plattenförmigen Basis 11. Zwischen den Rippen 10 sind drei Vertiefungen 12 sichtbar, die bis zu der Basis 11 hinab reichen.

In dem Querschnitt der Folie 2 ist lediglich schematisch angedeutet, dass die Folie eine Außenlage 13 und eine Innenlage 14 aufweist. Deutlich zu sehen ist zudem, dass die Schwächungszone 15 an jener Stelle ausgebildet ist, die bei dem mit der Folie 2 verpackten Produkt 3 an der Stelle - bzw. über - der Vertiefung 12 lokalisiert ist. Die Schwächungszone 15 befindet sich also an jenem von der Basis 11 des Produkts 3 abgewandten Teil der Verpackung 1. Zusätzlich zu der ersten Prägelinie 18 ist eine zweite Prägelinie 18 angedeutet, die korrespondierend zu der Vertiefung 12, insbesondere jedoch an der selben Position wie die Schwächungszone 15, allerdings an jenem der Basis 11 des Produkts 3 zugewandten Teil der Verpackung 1 lokalisiert ist.

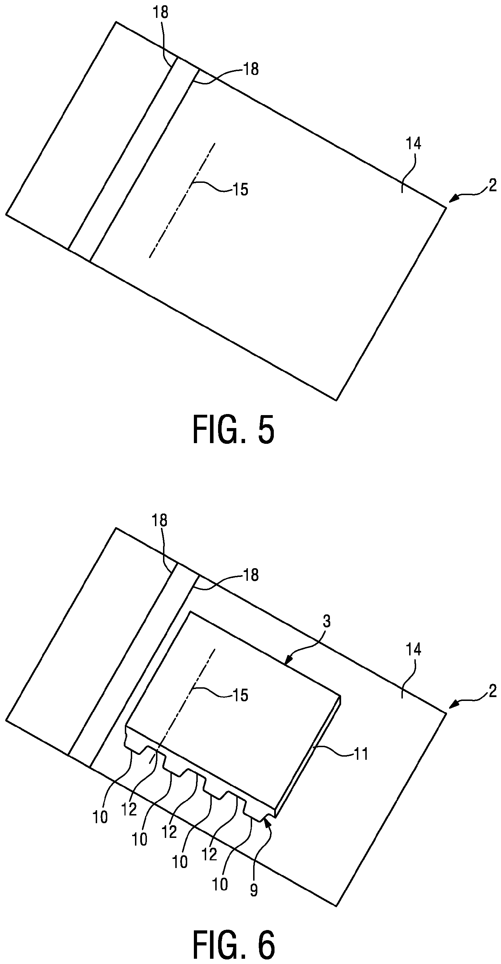

In der Figur 5 ist ein Streifen der Folie 2 dargestellt, aus dem die in der Fig. 1 abgebildete Verpackung 1 auf einer erfindungsgemäßen Verpackungsmaschine hergestellt wurde. Von der Folie 2 ist die Innenlage 14 zu sehen. Mit unterbrochener Linie ist die Schwächungszone 15 angedeutet, die sich in der vorliegenden Perspektive in der nicht sichtbaren Außenlage 13 befindet. Benachbart zu der Schwächungszone 15 sind zwei Prägelinien 18 zu sehen, die sich über die gesamte Breite der Folie 2 erstrecken und Faltlinien zur Unterstützung der Wiederverschliessbarkeit der Verpackung vordefinieren.

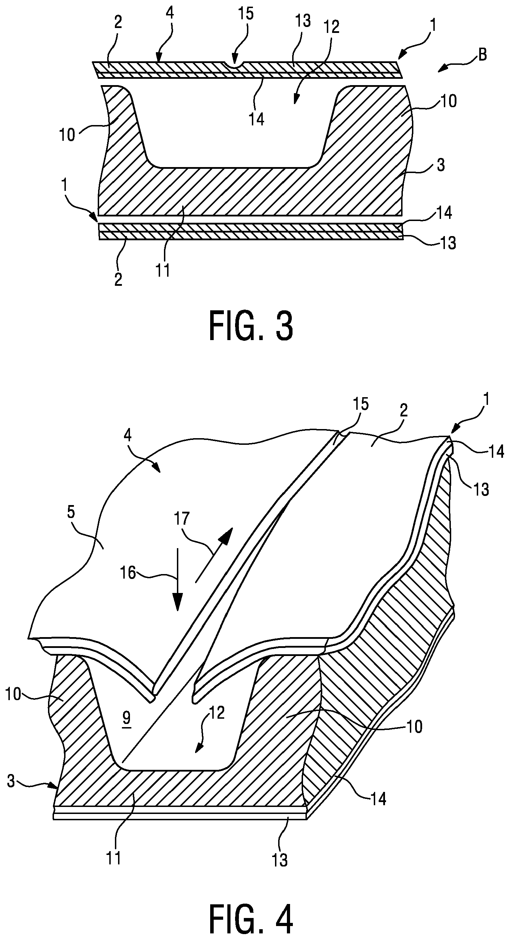

In der Fig. 3 ist ein in der Fig. 2 dargestellter bzw. abgegrenzter Detailbereich B in einer vergrößerten Ansicht dargestellt. Deutlich zu sehen ist in der Fig. 3 die Lagenstruktur der Folie 2 und die örtliche Position der Schwächungszone 15 in Bezug auf die Vertiefung 12. Die Folie 2 weist die Vertiefung 15 nur in der Außenlage 13 auf.

In der Fig. 4 ist ein Öffnungsvorgang unter Druckkrafteinwirkung auf die Folie 2 dargestellt. Die vorliegende Perspektive zeigt den in der Fig. 2 dargestellten Detailbereich B im Schrägriss, genauer gesagt in der Perspektive gemäß der Fig. 1. Eine Druckkraft 16 wirkt von oberhalb der Vertiefung 12 auf die Schwächungszone 15. Dabei wird die Verpackung 1 an der Stelle der Druckkraft 16 unter Spannung gesetzt, weil dort die Folie 2 in die Vertiefung 12 hineingedrückt wird. Im Unterschied zu der Fig. 3 liegt daher die Folie 2 so wie in der Fig. 4 dargestellt an dem Produkt 3 an.

Der Öffnungsvorgang der Verpackung ist nachfolgend beschrieben. Auf die Verpackung wird zunächst eine sich betragsmäßig erhöhende Druckkraft aufgebracht, wobei der mit dem Bezugszeichen 16 versehnen Pfeil die Richtung der Druckkraft angibt und wie bereits zuvor eingeführt das Bezugszeichen 16 der Druckkraft zugeordnet ist. Sobald der Wert die Druckkraft 16 die Reißfestigkeit der Folie 2 - letztendlich der Innenlage 14 - übersteigt, beginnt die Folie 2 an dem Punkt der Krafteinwirkung der Druckkraft 16 aufzureißen. Um nun die Verpackung 1 vollständig entlang der Vertiefung 12 aufzudrücken, wird der Punkt der Krafteinwirkung entlang der durch den Pfeil 17 angedeuteten Bewegungsrichtung verschoben. Als Folge davon breitet sich der Riss in der Innenlage 14 entlang der Schwächungszone 12 in Richtung der kopfseitigen Quersiegelnaht 6 (siehe Fig. 1) aus.

Bedingt durch den Umstand, dass die zu der Schwächungszone 15 benachbarten Bereiche der Folie 2 zweilagig ausgebildet sind und folglich auch deren Reißfestigkeit wesentlich höher ist als der in der Schwächungszone zugängliche einlagige Bereich der Folie 2, kommt es zu einem sauberen und geraden Riss in der Folie 2. Es entstehen also im Gegensatz zu herkömmlichen Lösungen keinerlei Ausfransungen oder sogar Abrisse von der Folie. Eine Verunreinigung des Produkts 3 durch die Verpackung 1 ist somit vermieden.

Das Aufbringen der Druckkraft 16 kann dabei auf intuitive und individuelle Weise erfolgen. So kann beispielsweise ein Schreibwerkzeug, ein Schlüssel oder ein Besteck dafür verwendet werden. Das Aufbringen der Druckkraft 16 kann jedoch auch auf intuitive Weise durch einen Finger oder einen Fingernagel eines Benutzers erfolgen. Durch die örtliche Positionierung der Schwächungszone 15 genau oberhalb bzw. über der Vertiefung 12 und der Ausbildung an der Außenlage 13 kann es auch zu keiner Beschädigung des mit Hilfe der Folie 2 verpackten Produktes 3 kommen, da ein Benutzer der Verpackung intuitiv dazu angeleitet ist, die Verpackung entlang der Schwächungszone 15 einzudrücken. Die Sichtbarkeit der Schwächungszone 15 an der Außenseite der Verpackung 1, die gegebenenfalls noch durch entsprechende Aufdrucke auf der Verpackung 1 verbessert werden kann, lädt den Benutzer der Verpackung 1 förmlich dazu ein, genau dort den Öffnungsvorgang zu starten. Die Schwächungszone 15, die an jener Stelle ausgebildet ist, die bei dem mit der Folie 2 verpackten Produkt 3 an der Stelle der Vertiefung 12 des Produkts 3 lokalisiert ist, realisiert folglich eine druckkraftempfindliche Öffnungshilfe oder Sollbruchzone der Verpackung 1.

Sobald die Verpackung 1 entlang der Schwächungszone 15 aufgedrückt wurde, können die voneinander losgelösten Bereiche der Folie 2 zur linken bzw. rechten Seite des Spaltes in der Verpackung 1 mühelos weggeklappt werden und so das verpackte Produkt freigelegt werden. Genauso gut kann eine Rippe 10 oder mehrere der Rippen 10 des Produktes 3 weggebrochen werden. Bedingt durch den Umstand, dass die Folie 2 bereits aufgedrückt wurde, entstehen nun bei dem Wegbrechen der Rippe 10 bzw. der Rippen 10 keine unschönen Verformungen an den Rippenköpfen, weil die Folie 2 - die ja bereits aufgedrückt wurde - keine oder nur mehr vernachlässigbare Zugkräfte bzw. Druckkräfte auf die Rippenköpfe ausüben bzw. übertragen kann. Die für das Produkt charakteristische Oberflächenstruktur bleibt also unberührt und unbeschädigt.

Bedingt durch die beiden Prägelinien 18 federt der zuvor von dem Produkt 3 weg geklappte Teil der Verpackung 1 nach der Entnahme einer Rippe 10 oder mehrerer Rippen 10 wieder zurück und nimmt in etwa seine Ausgangslage ein. Dadurch ist ein - wenn auch nicht hermetischer - Wiederverschluss der Verpackung realisiert.

Es wird abschließend noch einmal darauf hingewiesen, dass es sich bei den vorangehend detailliert beschriebenen Figuren nur um ein Ausführungsbeispiel handelt, welches vom Fachmann in verschiedenster Weise modifiziert werden kann, ohne den Bereich der Erfindung zu verlassen. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können. Auch können individuell offenbarte Merkmale mit anderen Merkmalen kombiniert werden und Proportionen der dargestellten Merkmale variieren, ohne dass von dem Konzept der Erfindung abgewichen wird.

### BEZUGSZEICHENLISTE

- 1: Verpackung
- 2: Folie
- 3: Produkt
- 4: Vorderwand
- 5: Seitenwand
- 6: erste Quersiegelnaht
- 7: zweite Quersiegelnaht
- 8: Längssiegelnaht
- 9: Oberfläche
- 10: Rippe
- 11: Basis
- 12: Vertiefung
- 13: Außenlage
- 14: Innenlage
- 15: Schwächungszone
- 16: Druckkraft
- 17: Bewegungsrichtung
- 18: Prägelinien
- A: Schnittlinie
- B: Detailbereich

## Patentansprüche

1. Verpacktes Produkt (3), das mit einer Folie (2) bzw. einem Laminat verpackt ist,
wobei das Produkt (3) ein mit Schokolade überzogener oder aus Schokolade gefertigter Riegel ist, der an seiner Oberfläche (9) bereichsweise eine Vertiefung (12) verlaufend in Längsrichtung von dazu benachbarten Rippen (10) aufweist, welche Rippen (10) über die Vertiefung (12) hinweg erhaben sind, und
wobei die Folie (2) eine Außenlage (13) aufweist, die bei dem mit der Folie (2) verpackten Produkt (3) von dem Produkt (3) weg weist und eine Schwächungszone (15) aufweist,
wobei besagte Schwächungszone (15) an der Stelle der Vertiefung (12) der Oberfläche (9) des Produkts (3) lokalisiert ist und linienartig ausgebildet ist und ihre Richtung entlang der Vertiefung (12) verläuft und eine druckkraftempfindliche Öffnungshilfe realisiert, die an der Stelle der Vertiefung (12) eine Öffnung durch Druckkrafteinwirkung auf die Folie (2) ermöglicht und ohne Beschädigung des mit der Folie (2) verpackten Produkts (3) den direkten Zugriff auf jenen Teil bzw. ein Freilegen dieses Teils des Produkts (3), der zum Abtrennen bzw. Abbrechen von dem Produkt (3) vorgesehen ist, erlaubt.

2. Verpacktes Produkt (3) nach Anspruch 1, wobei die Schwächungszone (15) eine Länge aufweist, die der Länge der Vertiefung (12) des Riegels (3) entspricht.

3. Verpacktes Produkt (3) nach einem der vorangehenden Ansprüche, wobei die Folie (2) als die Außenlage (13) eine Kunststoff aufweisende Lage und in oder als eine Innenlage (14), die bei dem mit der Folie (2) verpackten Riegel (3) zu dem Riegel (3) hin weist, eine Barrierelage aufweist und die Schwächungszone (15) nur außerhalb der Innenlage (14) der Folie oder auch bis in die Innenlage (14) hinein reicht, wobei die Barrierelage der Folie (2) unbeschadet ist.

4. Verpacktes Produkt (3), nach einem der vorangehenden Ansprüche, wobei eine Prägelinie (18) im Wesentlichen parallel zu der Schwächungszone (15) und in einem Abstand von der Schwächungszone (15) an einem Bereich ausgebildet ist, der bei einem mit der Folie (2) verpackten Riegel (3) der Position einer Außenkante des Riegels (3) entspricht.

5. Verpacktes Produkt (3) nach einem der vorangehenden Ansprüche, wobei eine Prägelinie (18) im Wesentlichen parallel zu der Schwächungszone (15) an einem zu der Position der Schwächungszone (15) korrespondierenden Bereich ausgebildet ist, der bei einem mit der Folie (2) verpackten Riegel (3) auf jener von der Vertiefung (12) abgewandten Seite des Riegels (3) lokalisiert ist.

6. Verpacktes Produkt (3) nach einem der vorangehenden Ansprüche, wobei die Folie (2) entsprechend der Anzahl bzw. der Sequenz der Vertiefungen (12) in dem Produkt (3) eine entsprechende Anzahl oder eine geringere Anzahl an Schwächungszonen (15) aufweist.

7. Verwendung einer Folie (2) bzw. eines Laminats als Verpackung (1) eines damit verpackten Produkts (3),
wobei das Produkt (3) ein mit Schokolade überzogener oder aus Schokolade gefertigter Riegel ist, der an seiner Oberfläche (9) bereichsweise eine Vertiefung (12) verlaufend in Längsrichtung von dazu benachbarten Rippen (10) aufweist, welche Rippen (10) über die Vertiefung (12) hinweg erhaben sind, und
wobei die Folie (2) eine Außenlage (13) aufweist, die bei dem mit der Folie (2) verpackten Produkt (3) von dem Produkt (3) weg weist und eine Schwächungszone (15) aufweist, wobei die in der Folie (2) ausgebildete Schwächungszone (15) an der Stelle der Vertiefung (12) der Oberfläche (9) des Produkts (3) lokalisiert ist und linienartig ausgebildet ist und ihre Richtung entlang der Vertiefung (12) verläuft und eine druckkraftempfindliche Öffnungshilfe realisiert, die an der Stelle der Vertiefung (12) eine Öffnung durch Druckkrafteinwirkung auf die Folie (2) ermöglicht und ohne Beschädigung des mit der Folie (2) verpackten Produkts (3) den direkten Zugriff auf jenen Teil bzw. ein Freilegen dieses Teils des Produkts (3), der zum Abtrennen bzw. Abbrechen von dem Produkt (3) vorgesehen ist, erlaubt.

8. Verfahren zum Verpacken eines Produkts (3) mit einer Folie (2) bzw. einem Laminat,
wobei das Produkt (3) ein mit Schokolade überzogener oder aus Schokolade gefertigter Riegel ist, der an seiner Oberfläche (9) bereichsweise eine Vertiefung (12) verlaufend in Längsrichtung von dazu benachbarten Rippen (10) aufweist, welche Rippen (10) über die Vertiefung (12) hinweg erhaben sind, und
wobei die Folie (2) eine Außenlage (13) aufweist, die eine Schwächungszone (15) aufweist, die linienartig ausgebildet ist,
wobei bei dem Verfahren
die Folie (2) mit dem Produkt (3) derart in Kotakt gebracht wird, dass die Außenlage (13) der Folie (2) von dem Produkt (3) weg weist, und
eine Schwächungszone (15) in der Außenlage (13) der Folie (2) derart in Bezug auf die Vertiefung (12) ausgerichtet wird, dass die Vertiefung (12) an der Position der Schwächungszone (15) lokalisiert ist und ihre Richtung entlang der Vertiefung (12) verläuft, sodass sie eine druckkraftempfindliche Öffnungshilfe realisiert, die an der Stelle der Vertiefung (12) eine Öffnung durch Druckkrafteinwirkung auf die Folie (2) ermöglicht und ohne Beschädigung des mit der Folie (2) verpackten Produkts (3) den direkten Zugriff auf jenen Teil bzw. ein Freilegen dieses Teils des Produkts (3), der zum Abtrennen bzw. Abbrechen von dem Produkt (3) vorgesehen ist, erlaubt.

9. Verfahren nach Anspruch 8, wobei
ein Materialstreifen der Folie (2) um das Produkt (3) geschlagen wird, sodass den Materialstreifen begrenzende unterschiedliche Ränder des Materialstreifens aneinander gefügt werden und eine Längssiegelnaht (8) durch diese Ränder gebildet wird, und wobei
jeweils zwei identische Ränder des Materialstreifens aneinander gefügt werden, wodurch eine kopfseitige und eine fußseitige Quersiegelnaht (6, 7) erzeugt wird.

## Claims

1. Packaged product (3) which is packaged with a film (2) or a laminate,
wherein the product (3) is a bar covered with chocolate or made from chocolate, areas of the surface (9) of which have a depression (12) extending longitudinally from ridges (10) adjacent thereto, which ridges (10) rise above the depression (12), and
wherein the film (2) has an outer layer (13) which faces away from the product (3) when the product (3) is packaged with the film (2) and has a weakened zone (15), wherein said weakened zone (15) is located at the position of the depression (12) in the surface (9) of the product (3) and is linear in form and extends in the direction of the depression (12) and
creates an opening aid which is responsive to compressive force, which enables an opening to be made at the location of the depression (12) by the action of compressive force on the film (2), and makes it possible for a portion of the product (3) to be accessed directly and/or exposed without damaging the product (3) packaged in the film (2) for the purpose of separating or breaking a portion off from the product (3).

2. Packaged product (3) according to Claim 1, wherein the weakened zone (15) has a length that matches the length of the depression (12) in the bar (3).

3. Packaged product (3) according to any one of the preceding claims, wherein the film (2) has a layer containing plastic as the outer layer (13) and has a barrier layer in or constituting an inner layer (14) which faces the bar (3) when the bar (3) is packaged with the film (2), and the weakened zone (15) only extends outside the inner layer (14) of the film or also as far as into the inner layer of the (14), wherein the barrier layer of the film (2) is undamaged.

4. Packaged product (3) according to any one of the preceding claims, wherein a crease line (18) is formed substantially parallel to the weakened zone (15) and at a distance from the weakened zone (15) on an area that corresponds to the position of an outer edge of the bar (3) when a bar (3) is packaged with the film (2).

5. Packaged product (3) according to any one of the preceding claims, wherein a crease line (18) is formed substantially parallel to the weakened zone (15) on an area that corresponds to the position of the weakened zone (15), which area is located on the side of the bar (3) facing away from the depression (12) when a bar (3) is packaged with the film (2).

6. Packaged product (3) according to any one of the preceding claims, wherein the film (2) has a number of weakened zones (15) corresponding to or smaller than the number or sequence of the depressions (12) in the product (3).

7. Use of a film (2) or laminate as packaging (1) for a product (3) packaged therein,
wherein the product (3) is a bar covered with chocolate or made from chocolate, areas of the surface (9) of which have a depression (12) extending longitudinally from ridges (10) adjacent thereto, which ridges (10) rise above the depression (12), and
wherein the film (2) has an outer layer (13) which faces away from the product (3) when the product (3) is packaged with the film (2) and has a weakened zone (15), wherein the weakened zone (15) formed in the film (2) is located at the position of the depression (12) in the surface (9) of the product (3) and is linear in form and extends in the direction of the depression (12) and creates an opening aid which is responsive to compressive force, which enables an opening to be made at the location of the depression (12) by the action of compressive force on the film (2), and makes it possible for a portion of the product (3) to be accessed directly and/or exposed without damaging the product (3) packaged in the film (2) for the purpose of separating or breaking a portion off from the product (3).

8. Method for packaging a product (3) with a film (2) or laminate,
wherein the product (3) is a bar covered with chocolate or made from chocolate, areas of the surface (9) of which have a depression (12) extending longitudinally from ridges (10) adjacent thereto, which ridges (10) rise above the depression (12), and
wherein the film (2) has an outer layer (13) that has a weakened zone (15) which is linear in form,
wherein in the method
the film (2) is brought into contact with the product (3) in such manner that the outer layer (13) of the film (2) faces away from the product (3) and a weakened zone (15) in the outer layer (13) of the film (2) is aligned relative to the depression (12) in such manner that the depression (12) is located at the position of the weakened zone (15) and extends in the direction of the depression (12), thereby creating an opening aid which is responsive to compressive force, which enables an opening to be made at the location of the depression (12) by the action of compressive force on the film (2), and makes it possible for a portion of the product (3) to be accessed directly and/or exposed without damaging the product (3) packaged in the film (2) for the purpose of separating or breaking a portion off from the product (3) .

9. Method according to Claim 8, wherein
is strip of material of the film (2) is wrapped around the product (3) so that various borders of the material strip that terminate the material strip are joined to each other and a longitudinal sealing seam (8) is formed by said borders, and wherein
each of two identical borders of the strip of material are joined together, thereby creating a head-side and a foot-side transverse sealing seam (6, 7).

## Revendications

1. Produit emballé (3), lequel est emballé dans un film (2) ou dans un laminé,
le produit (3) étant une barre enrobée de chocolat ou fabriquée en chocolat, qui sur sa surface (9) comporte par endroits un creux (12) s'écoulant dans la direction longitudinale de nervures (10) voisines de celui-ci, lesquelles nervures (10) sont en relief par-dessus le creux (12) et le film (2) comportant une couche extérieure (13), qui lorsque le produit (3) est emballé dans le film (2) s'éloigne du produit (3) et comporte une zone d'affaiblissement (15),
ladite zone d'affaiblissement (15) étant localisée à l'endroit du creux (12) de la surface (9) du produit (3) et étant conçue en forme d'une ligne et sa direction s'écoulant le long du creux (12) et réalisant une aide à l'ouverture sensible à la force de pression, qui à l'endroit du creux (12) permet une ouverture sous l'exercice d'une force de pression sur le film (2) et permet sans endommager le produit (3) emballé dans le film (2) l'accès direct à la partie ou une libération de ladite partie du produit (3) qui est prévue pour être sectionnée ou cassée du produit (3).

2. Produit emballé (3) selon la revendication 1, la zone d'affaiblissement (15) présentant une longueur qui correspond à la longueur du creux (12) de la barre (3).

3. Produit emballé (3) selon l'une quelconque des revendications précédentes, en tant que couche extérieure (13), le film (2) comportant une couche comportant de la matière plastique et dans ou en tant qu'une couche intérieure (14), qui lorsque la barre (3) est emballée dans le film (2) est dirigée vers la barre (3), comporte une couche formant barrière et la zone d'affaiblissement (15) n'arrivant qu'à l'extérieur de la couche intérieure (14) du film ou également jusque dans la couche intérieure (14), la couche formant barrière du film (2) étant intacte.

4. Produit emballé (3) selon l'une quelconque des revendications précédentes, une ligne gaufrée (18) étant réalisée sensiblement à la parallèle de la zone d'affaiblissement (15) et à un écart de la zone d'affaiblissement (15), dans une région qui lorsque la barre (3) est emballée dans le film (2) correspond à la position d'une arête extérieure de la barre (3).

5. Produit emballé (3) selon l'une quelconque des revendications précédentes, une ligne gaufrée (18) étant réalisée sensiblement à la parallèle de la zone d'affaiblissement (15), dans une région correspondant à la position de la zone d'affaiblissement (15), qui lorsque la barre (3) est emballée dans le film (2) est localisée sur le côté de la barre (3) qui est opposé au creux (12).

6. Produit emballé (3) selon l'une quelconque des revendications précédentes, le film (2) comportant, en fonction du nombre ou de la séquence des creux (12) dans le produit (3) un nombre correspondant ou un nombre moins élevé de zones d'affaiblissement (15).

7. Utilisation d'un film (2) ou d'un laminé comme emballage (1) d'un produit (3) emballé dans celui-ci,
le produit (3) étant une barre enrobée de chocolat ou fabriquée en chocolat, qui sur sa surface (9) comporte par endroit un creux (12) s'écoulant dans la direction longitudinale de nervures (10) voisines de celui-ci, lesquelles nervures (10) sont en relief par-dessus le creux (12) et
le film (2) comportant une couche extérieure (13), qui lorsque le produit (3) est emballé dans le film (2), s'éloigne du produit (3) et comporte une zone d'affaiblissement (15), la zone d'affaiblissement (15) réalisée dans le film (2) étant localisée à l'endroit du creux (12) de la surface (9) du produit (3) et étant conçue en forme de ligne et sa direction s'écoulant le long du creux (12) et réalisant une aide à l'ouverture sensible à une force de pression, qui à l'endroit du creux (12) permet une ouverture par l'exercice d'une force de pression sur le film (2) et permet sans endommager le produit (3) emballé dans le film (2), l'accès direct à la partie ou la libération de ladite partie du produit (3) qui est prévue pour être sectionnée ou cassée du produit (3).

8. Procédé destiné à emballer un produit (3) dans un film (2) ou dans un laminé,
le produit (3) étant une barre enrobée de chocolat ou fabriquée en chocolat, qui comporte par endroits sur sa surface (9) un creux (12) s'écoulant dans la direction longitudinale de nervures (10) voisines de celui-ci, lesquelles nervures (10) étant en relief par-dessus le creux (12) et
le film (2) comportant une couche extérieure (13) qui comporte une zone d'affaiblissement (15) qui est conçue sous la forme d'une ligne, sachant que lors du procédé, on amène le film (2) en contact avec le produit (3) de telle sorte que la couche extérieure (13) du film (2) s'éloigne du produit (3) et
on oriente une zone d'affaiblissement (15) dans la couche extérieure (13) du film (2) par rapport au creux (12) de telle sorte que le creux (12) soit localisé sur la position de la zone d'affaiblissement (15) et que sa direction s'écoule le long du creux (12), de sorte qu'elle réalise une aide à l'ouverture sensible à une force de pression, qui à l'endroit du creux (12) permet une ouverture par l'exercice d'une force de pression sur le film (2) et permet sans endommager le produit (3) emballé dans le film (2), l'accès direct à la partie ou une libération de ladite partie du produit (3), qui est prévue pour être sectionnée ou cassée du produit (3) .

9. Procédé selon la revendication 8,
lors duquel on entoure le produit (3) d'une bande de matière du film (2), de sorte que différents bords de la bande de matière délimitant la bande de matière soient assemblés et que lesdits bords forment un joint de scellement longitudinal (8) et
on assemble chaque fois deux bords identiques de la bande de matière, ce qui donne lieu à un joint de scellement transversal (6, 7) en partie haute et en partie basse.
